# EUROPEAN PATENT APPLICATION

(11) **EP 4 834 491 A2**
(43) Date of publication of application: **04.11.2026**
(21) Application number: 26205599.9
(22) Date of filing: 16.05.2023
(51) Int. Cl.: B05C 17/01

(54) **PICCOMIX ULTRASONIC WELD**

(30) Priority: 19.05.2022 EP 22174250; 08.11.2022 EP 22206190; 18.11.2022 EP 22208397; 20.12.2022 EP 22214952; 13.03.2023 EP 23161422
(62) Document number(s) of the earlier application(s) in accordance with Art. 76 EPC: 23727966.6 / 4 496 663
(71) Applicant: medmix Switzerland AG, 9469 Haag (Rheintal) (CH)
(72) Inventor: BASTOS, Emanuel, 9470 Buchs (CH); MOSER, Josef, 5726 Unterkulm (CH); DELIAVAL, Nicolas, 9470 Buchs (CH)
(74) Representative: Manitz Finsterwald Patent- und Rechtsanwaltspartnerschaft mbB

(57) **Abstract**

The invention further relates to a dispensing outlet, preferably for use in a dispensing system (10). The dispensing outlet comprises a static mixer (12) comprising a housing (28), wherein the housing (28) of the static mixer (12) comprises an energy carrier (142), wherein the static mixer (12) comprises an inlet manifold (146) and the inlet manifold (146) comprises a ledge (144), wherein the inlet manifold (146) is permanently attached to the housing (28) via the energy carrier (142) and the ledge (144) in an ultrasonic welding process.

## Description

The present invention relates to a dispensing system comprising a cartridge, a dispensing outlet, such as a static mixer, and a connector as well as to a dispensing outlet optionally configured for use in such a dispensing system.

Dispensing systems exists in a multitude of forms that can be used in a plethora of applications ranging from dental applications, medical applications, veterinary applications to industrial applications and the like.

The dispensing systems typically have an outlet that can be connected to a cartridge in order to guide material stored in the cartridge to a point of application via the outlet. If two-component materials, such as adhesives, paints, molding materials, impression materials and the like are to be dispensed, the outlet portion of the dispensing system typically comprises a mixer to mix the two-components for the purpose of more or less ideal dispensing.

Frequently the dispensing systems are composed of plastic parts and specifically the outlets, i.e. the mixers, are single use parts that are discarded after every use. When the outlets are discarded, the material to be dispensed that remains also contributes to the waste material.

For this reason it is an object of the present invention to provide a dispensing system via which the material waste can be reduced, both with regard to the amount of plastic in the components and also with regard to the materials to be dispensed using the dispensing system.

This object is satisfied by the subject matter of the respective independent claim.

Such a dispensing system comprises a dispensing outlet, a cartridge, a connector and a plug element arranged within the connector and at the cartridge, wherein the connector is arranged at the cartridge and the dispensing outlet is separate from the connector and from the cartridge and wherein the connector can be locked to the cartridge by a rotation of the connector into a position of use about a longitudinal axis, wherein a rotation of the connector into the position of use brings about an axial movement of the plug element relative to the cartridge and to the dispensing outlet along the longitudinal axis.

By arranging the connector at the cartridge rather than at the dispensing outlet, a material of the connector is not discarded after use of the dispensing outlet reducing the plastic waste after use of the dispensing system.

Moreover, such a dispensing system can be formed with reduced size of the components leading to a further reduction in the waste material. It should also be noted that due to the reduced size and complexity of the dispensing outlet these can be produced in a more efficient manner.

The rotation of the connector relative to the dispensing outlet about the longitudinal axis may lock the dispensing outlet to the connector. In this way a rotation of the connector can carry out two functions a locking function and an activation function.

The rotation of the connector relative to the dispensing outlet about the longitudinal axis with an installed dispensing outlet may lock the connector to the cartridge. In this way a removal of the connector from the cartridge can be prevented.

The axial movement of the plug into the position of use permits a flow of material from the cartridge into the dispensing outlet.

The dispensing outlet may comprise an outlet opening and a respective inlet arranged spaced apart from the outlet opening along a longitudinal axis. Such inlets and outlets permit a flow of material through the dispensing outlet on use of the dispensing system.

The dispensing outlet may comprise at least one of an intra oral rotational tip (IOR) and a static mixer. Such a dispensing outlet is particularly beneficially used on dispensing multi-component materials.

The cartridge may be a two-component cartridge and wherein the static mixer may comprise a distributor for guiding a respective flow of material from the cartridge via a respective inlet to a mixing element of the static mixer. In this way optimized mixing results can be achieved by guiding the flow of material in an as efficient as possible manner to the mixing element.

Said static mixer may comprise a housing enclosing the mixing element and the inlets, wherein the housing comprises at least one, in particular axially extending, locking groove on an inner surface thereof. Furthermore, the connector may comprise at least one, in particular axially extending, locking protrusion configured to engage with a locking groove of the housing for rotationally fixing the housing to the connector. In this way, the housing of the static mixer may serve as well accessible operation member for rotating the connector into and out of the position of use.

In such a configuration, the internal components of the static mixer, in particular the inlets of the static mixer, are coupled in an axially fixed but rotationally movable manner to the housing. In this way, a rotational movement of the connector is reliably decoupled from the inlets of the static mixer.

Said housing may be configured to be fixed to the cartridge via a further fixing configuration, in particular in the form of a snap-in configuration or a thread. In particular, said fixing is acting more axially than rotationally. In this way, an unintended removal of the static mixer from the cartridge can be prevented reliably.

The distributor may have a non-circular outer cross-section, preferably in a plane perpendicular to the longitudinal axis. In this way one can provide a coded alignment means for connecting the static mixer to the cartridge through the use of a non-circular distributor.

The connector may have an opening formed in a top end thereof, with the opening having a non-circular inner cross-section, wherein the dispensing outlet may be insertable into the connector via the opening. In this way the connector and the static mixer are formed complementary to one another, i.e. the non-circular outer cross-section of the distributor may be formed complementary in shape to the non-circular inner cross-section of the opening.

The static mixer may comprise a disc arranged at a housing of the static mixer, with the disc then being arranged spaced apart at a spacing from a top side of the distributor along the longitudinal axis. Such a disc can be used as a protective cover to prevent material from entering and/or exiting the connector on use of the dispensing system. Moreover, such a disc can be used for releasing the plugged connection between the the static mixer and the cartridge of the dispensing system.

The spacing between the disc and the distributor may correspond to a thickness of a wall of the connector at the top end, optionally wherein on a rotation of the connector relative to the static mixer the static mixer is clamped to the cartridge via the connector in the spacing between the disc and the distributor. In this way part of the connector can be moved into and out of the space formed between the disc and the distributor of the static mixer for the locking movement.

The dispensing outlet may comprise a housing having a connection region configured to be received within a receiving portion of a/the IOR. By forming the connection region on an outer surface of the housing enables a volume spanned by the housing to be reduced leading to a reduction in the material left behind in the dispensing outlet after a dispensing action and hence also enables a reduction in the amount of waste during use of the dispensing system.

The plug may comprise an outer thread that interacts with an inner thread of the connector to bring about the axial movement of the plug. Such a thread pair can be reliably used to form a quarter turn coupling between the cartridge and the static mixer. The thread can be a single start thread or a multiple start thread.

The plug may comprise two, preferably cylindrical, outlets connected to two respective windows acting as inlets from the cartridge, each with a respective seal being arranged downstream from the windows along the longitudinal axis. The seal optionally being provided to avoid a fluid communicating connection between a respective cartridge chamber and the corresponding window, when the connector is not in the position of use. In this way a minimalist design of the plug can be used leading to a further reduction in the amount of materials used to form the dispensing system and its accessories. Such a configuration is very suitable for an implementation, in which the plug element is moved in a direction away from the cartridge, when brought into the position of use.

Alternatively, the plug may comprise two, preferably cylindrical, outlets connected to two respective windows acting as inlets from the cartridge, each with a respective seal being arranged at the same height as the windows along the longitudinal axis. The seal optionally being provided to avoid a fluid communicating connection between a respective cartridge chamber and the corresponding window, when the connector is not in the position of use. In this way a minimalist design of the plug can be used leading to a further reduction in the amount of materials used to form the dispensing system and its accessories. Such a configuration is very suitable for an implementation, in which the plug element is moved in a direction towards the cartridge, when brought into the position of use.

The rotation of the connector into the position of use may bring about an axial lifting movement of the plug element away from the cartridge and towards the dispensing outlet along the longitudinal axis. Such a configuration is quite intuitive and easy to implement.

Alternatively, the rotation of the connector into the position of use may bring about an axial pushing movement of the plug element towards the cartridge and away from the dispensing outlet along the longitudinal axis. Such a configuration is very compact and robust.

The inner shape geometry of a housing of the dispensing system may correspond at least partly to the outer shape geometry of the connector and/or has locking means to create a mechanical connection in order to releasably connect the housing to the connector and directly transfer rotary motion of the housing on the connector in order to close or open the plug element. Such a configuration is very robust and reliable.

The plug-element may be configured to move in a direction towards the cartridge when axially moved into the position of use by rotation to provide a fluid communication between outlet passages of the cartridge, windows of the plug element and inlets of the dispensing outlet. In particular the outlet passages of the cartridge may be provided with seals closing the windows of the plug element in a first position thereof and opening the windows of the plug element at a second position thereof. Such a configuration is highly functional and compact.

The present invention relates to a dispensing outlet, preferably for use in a dispensing system, the dispensing outlet comprising a static mixer comprising a housing, wherein the housing of the static mixer comprises an energy carrier, wherein the static mixer comprises an inlet manifold and the inlet manifold comprises a ledge, wherein the inlet manifold is permanently attached to the housing via the energy carrier and the ledge in an ultrasonic welding process.

The inlet manifold permanently attached to the housing can ensure an as compact as possible design even if for filigree components.

The energy carrier may be arranged adjacent the positioning grid. The energy carrier may have an elongate shape. In this way an assembly of the dispensing outlet can be simplified.

The present invention relates to a dispensing outlet, preferably for use in a dispensing system as described herein, The dispensing outlet may comprise an IOR, with the IOR being attachable at an outer side of a housing of the static mixer such that the IOR can rotate relative to the static mixer but cannot be axially moved. In this connection, also other types of mixers can be used together with the IOR or other types of intra oral tips (IOTs) could be used together with the static mixer, preferably the static mixer does not comprise a connector, but this is arranged at the cartridge as described herein.

The dispensing outlet can comprise further features as defined herein. Such a dispensing outlet permits the correct placement of the dispensing outlet at a point of treatment, for example, at a cavity of a dental patient or the like.

The IOR may comprise an inner surface having one or more inner surface ribs arranged thereat and the outer housing comprising one or more outer side ribs arranged at the outer side. In this way one can position the IOR relative to the housing.

The one or more inner surface ribs and the one or more outer side ribs may extend in parallel to one another. In this way the dispensing outlet becomes more user friendly.

The one or more inner surface ribs may be configured to mesh with said one or more outer side ribs. In this way a pre-defined position of the IOR relative to the housing can be maintained in use of the dispensing outlet.

The one or more inner surface ribs and said one or more outer side ribs may extend in parallel to the longitudinal axis. In this way an as compact as possible dispensing outlet can be formed.

The IOR may comprise an inlet. The inlet may comprise one or more circumferentially extending ribs, preferably two circumferentially extending ribs. In this way an attachment of the IOR at the housing can be facilitated.

The inlet may comprise one or more apertures, preferably two apertures. In such a way a snap-fit connection can be formed that is simpler to manipulate on assembly of the dispensing outlet.

A respective one of the one or more circumferentially extending ribs is are arranged at a respective one of the one or more apertures. In this way a construction size of the dispensing outlet can be minimized.

The respective ones of the one or more apertures may be arranged downstream of the one or more one or more circumferentially extending ribs when viewed from an inlet opening of the inlet of the IOR. In this way a construction size of the dispensing outlet can be minimized.

The inner surface having the one or more inner surface ribs may be arranged at the inlet. In this way a construction size of the dispensing outlet can be minimized.

The IOR is non-removably attached to the outer housing, e.g. via one or more snap fit connections, preferably via two snap-fit connections. In this way a simple to manufacture connection is used that permits both a rotation of the IOR relative to the housing while securing it axially thereto.

The outer housing may comprise a circumferentially extending lip. In this way an as compact as possible dispensing outlet can be formed via which a snap-fit connection is made possible.

The static mixer may comprise a positioning grid that cooperates with two or more positioning grooves arranged within a connector of the static mixer. In this way an alignment between the connector and the components of the static mixer can be ensured.

The IOR may comprise an inlet receptacle having a body to which a cannula is attached. By way of example, the cannula can be attached to a body at an angle selected in the range of 15 to 75° with respect to a longitudinal axis, especially in the range of 25 to 65° with respect to the longitudinal axis.

By way of example the cannula may have a passage with an internal diameter selected in the range of 0.1 to 2 mm. In contrast to this the diameter of a housing of the mixing element arranged in the dispensing outlet may have an internal diameter selected in the range of 1 to 12 mm.

A length of the cannula may be selected in the range of 5 to 100 mm, especially in the range of 8 to 60 mm.

The dispensing outlet respectively the IOR may further comprising a plate that is connected to the body of the inlet receptacle. Such a plate enables an improved gripping of the dispensing outlet.

The plate may be connected to the body by one or more webs of material. By way of such a connection material can be saved and the plate can be formed in a simple manner.

The dispensing outlet respectively the IOR may further comprise a plate that is then connected to the body of the inlet receptacle via one or more webs at that part of the inlet receptacle where the cannula is attached to the body. Such a plate enables an improved gripping of the dispensing outlet on a use thereof.

The plate may have a flat outer surface. Such a flat outer surface enables an improved gripping of the plate on a use of the dispensing outlet.

According to a further aspect, a dispensing system comprises a dispensing outlet, a cartridge and a connector. The connector is coupled to the cartridge and the dispensing outlet is separate from the connector and from the cartridge. The dispensing unit can be engaged with and locked to the connector as well as brought into a position of use by a translational movement followed by a rotational or translational movement of the dispensing outlet relative to the cartridge. Such a configuration is very robust and reliable.

The connector may be provided within an engagement part coupled non-movably to the cartridge or forming a part of the cartridge. Such a configuration is very simple and robust.

The connector may comprise a passageway for receiving a section, in particular a distributor or protective disc, of the dispensing outlet to connect the dispensing outlet to the connector. Such a configuration is very compact and robust.

The connector may be rotatable about an axis perpendicular to the longitudinal axis of the dispensing outlet relative to the cartridge for locking the dispensing outlet to the cartridge. Such a configuration is very robust and easy to handle.

The connector may be slidable perpendicular with respect to the longitudinal axis of the dispensing outlet relative to the cartridge for locking the dispensing outlet to the cartridge. Such a configuration is very compact.

The connector may be rotatable about the longitudinal axis of the dispensing outlet relative to the cartridge for locking the dispensing outlet to the cartridge. Such a configuration is quite robust but still good to handle.

Further embodiments of the invention are described in the following description of the Figures. The invention will be explained in the following in detail by means of embodiments and with reference to the drawing in which is shown:
- Fig. 1a to c: a dispensing system in different states of use;
- Fig. 2: a sectional view through the dispensing system of Fig. 1c;
- Fig. 3a &b: sectional views of the dispensing system of Figs. 1b and 1c in the position of connection and in the position of use of the dispensing system;
- Fig. 4a &b: part sectional views of components of the dispensing system prior to connection and in the position of use;
- Fig. 5a &b: a further type of dispensing outlet as a perspective view and as a sectional view;
- Fig. 6a to c: views of the intra oral rotational tip of Fig. 5a & 5b;
- Fig. 7a &b: views of components of the dispensing outlet of Figs. 5a & 5b;
- Fig. 8a &b: views of further components of the dispensing outlet of Figs. 5a & 5b;
- Fig. 9: a sectional view of an alternative embodiment of a dispensing system;
- Fig. 10a to d: a further type of dispensing system in different states of use and a sectional view thereof in the position of use;
- Fig. 11a to d: another further type of dispensing system in different states of use and a sectional view thereof in the position of connection;
- Fig. 12a to d: a last further type of dispensing system in different states of use and a sectional view thereof in the position of use; and
- Fig. 13a to c: views of a further kind of intra oral rotational tip (IOR).

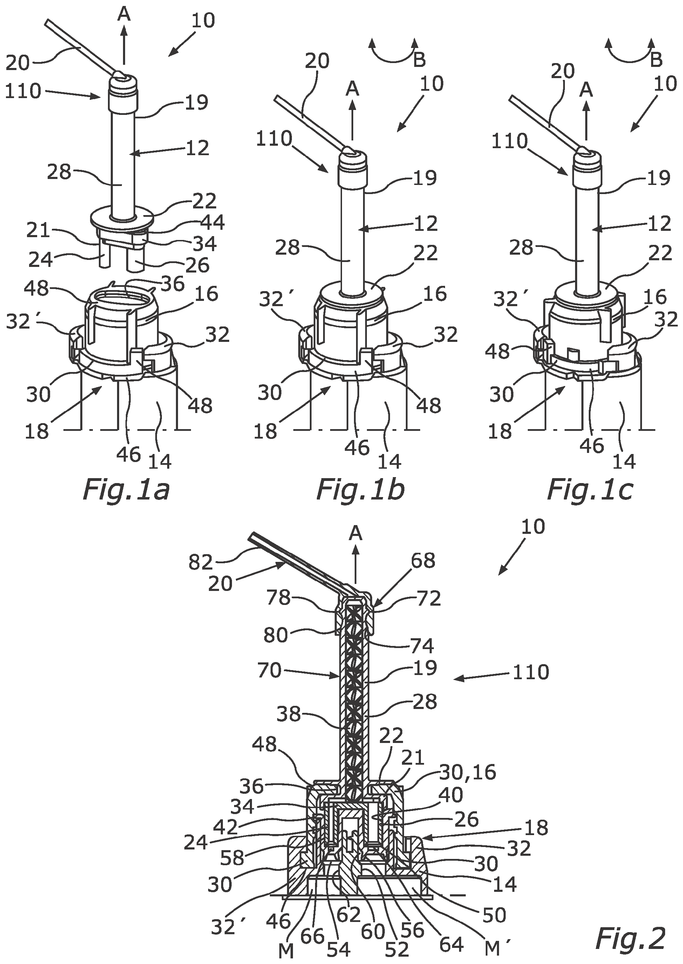

Figs. 1a to 1c show a dispensing system 10 in different states of use. The dispensing system 10 comprises a static mixer 12 that can be connected to a cartridge 14 via a connector 16. The connector 16 comprises a closure 18 via which the static mixer 12 can be releasably locked to the cartridge 14.

An intra oral rotational tip (IOR) 20 is arranged at an end of the static mixer 12 remote from an end to be connected to the connector 16. The IOR 20 is free to rotate relative to the housing 28.

In this connection it should be noted that the static mixer 12 respectively the IOR 20 can also be referred to as a dispensing outlet 110.

On connecting the static mixer 12 to the cartridge 14, two inlets 24, 26 of the static mixer 12 are inserted into an opening 36 of the connector 16. The inlets 24, 26 have different sizes as a form of coded alignment means. The different sizes of the inlets 24, 26 are dimensioned complementary with the sizes of outlets 40, 42 (see Fig. 2) of the dispensing system 10.

The inlets 24, 26 of the static mixer 12 are connected to a distributor 34 of the static mixer 12. The distributor 34 is configured to guide a respective flow of material M, M' (see Fig. 2) entering the static mixer 12 to a mixing element 38.

An outer shape of the distributor 34 is non-circular and shaped complementary to the shape of the opening 36 as a further kind of coded alignment means.

Due to the different types of coded alignment means, the static mixer 12 can only be connected to the cartridge 14 via the connector 16 in one orientation only ensuring the static mixer 12 is always connected to the cartridge 14 with the correct orientation.

In order to connect the static mixer 12 to the cartridge 14, the inlets 24, 26 and the distributor 34 of the static mixer 12 are introduced into the opening 36 of the cartridge 14 by axially pushing the static mixer 12 along a longitudinal axis A as is shown in Fig. 1a. The inlets 24, 26 connect with the outlets 40, 42 on plugging the static mixer 12 into the opening 36. In this connection it should be noted that the longitudinal axis A extends in parallel with a length of the static mixer 12.

Once the inlets 24, 26 and the distributor 34 of the static mixer 12 are received in the connector 16 as shown in Fig. 1b, the closure 18 of the connector 16 can be rotated relative to the static mixer 12 to move the static mixer 12 into a position of use from a position of connection. This is indicated by the arrow B in Fig. 1c.

A top side 44 of the distributor 34 is received within the connector 16 beneath a wall of the connector 16 defining the opening 36 such that once the closure 18 is rotated the static mixer 12 is locked to the connector 16 and can only be removed by rotating the closure 18 in the opposite direction along the arrow B. This is due to the fact that the opening 36 is shaped complementary to the shape of the distributor 24 and the opening 36 is aligned with the distributor 34 in the position of connection and not in the position of use.

If the closure 18 is not rotated and one pulls the static mixer 12 out of the locked closure 18, then at least one of the connector 16 and the static mixer 12 will be damaged.

The closure 18 is formed by a retaining ring that is journaled within two closure mounts 32, 32', by means of one or more shoulder portions 30 arranged at a bottom end 46 of the closure 18. In this way one can ensure that the closure 18 and the static mixer 12 are captively held at the cartridge 14 when the static mixer 12 is connected to the cartridge in the position of use.

The retaining ring also comprises one or more abutments that define a range of motion of the connector 16 between the position of connection and the position of use of the static mixer 12. In the present example the connector 16 can be rotated by 90° relative to the cartridge in order to move the connector 16 between the position of connection and the position of use of the static mixer 12.

In this connection it should be noted that a range of motion of the connector 16 between the position of connection and the position of use of the static mixer 12 can be selected in the range of 45° to 180° and especially in the range of 60° to 120°.

It should further be noted that a shape of the opening 36 and/or a shape of the distributor 34 is oval and/or egg shaped, especially in a plane perpendicular to the longitudinal axis A.

It should further be noted that both the opening 36 and the distributor 34 are covered in the position of use by a protective disc 22. This protective disc 22 at least substantially covers a top end 48 of the connector 16, i.e. of a plane spanned by the top end 48.

In this connection it should be noted that an area covered by the protective disc 22 is selected in the range of 60 % to 100 %, preferably 75 % to 100%, of the area of the top end 48 of the connector 16. In this way the opening 36 and the underlying parts of the connector 16 can be protected from contaminants when the static mixer 12 is applied and vice versa in the position of use an erroneous outflow of material M, M'' can also be avoided via this protective disc 22.

Moreover, the protective disc 22 also facilitates the release of a clamping between the static mixer 12 and the connector 16, as the distributor 34 and the protective sleeve 22 so to say clamp the top end 48 of the connector 16 therebetween on rotating the connector 16 out of the position of use.

A ratio of length of the inlets 24, 26 to a height of the distributor 34, i.e. along the longitudinal axis A is selected in the range of 1 to 4 times, preferably 1.2 to 3 times, the height of the distributor 34, i.e. a length of the inlets 24, 26 can be up to four times a height of the distributor 34.

A length of the spacing between the protective disc 22 and the top side 44 of the distributor is selected in the range of 1.01 to 1.2 times, preferably 1.02 to 1.1 times a wall thickness of the top end 48 of the connector 16.

The static mixer 12 shown in the foregoing does not comprise a connector or a threaded portion that can be used for the purpose of connection as is typically the case for static mixers used in dispensing systems 10.

Fig. 2 shows a sectional view through the dispensing system 10 of Fig. 1c, i.e. the dispensing system 10 in the position of use. A plug element 50 is arranged within the connector 16 and cooperates with the inlets 24, 26 and forms the outlets 40, 42 of the cartridge 14.

On rotating the connector 16 into the position of use, the connector 16 entrains the plug 50 and thereby lifts it axially upwards and towards the inlets 24, 26. Through this movement the outlets 40, 42 of the plug are moved in the outlet passages 52, 54 of the cartridge 14.

This movement allows a respective seal 56, 58 present at the outlets 40, 42 to come out of engagement from the outlet passages 52, 54, permitting a flow of material M, M' into a respective chamber 60, 62 of the outlet passages 52, 54. From this chamber 60,62 the flow of material M, M' can enter into the inlets 24, 26 via respective windows 64, 66.

From the windows 64, 66 the flow of material M, M' is directed via the distributor 34 to the mixing element 38, where the material M, M' is intimately mixed.

On rotating the plug 50 out of the position of use, the static mixer 12 is held at the same axial position due to the clamping of the connector 16 between the distributor 34 and the disc 22, such that the plug 50 is moved axially relative thereto away from the static mixer 12 ensuring a release of the static mixer 12 from the cartridge 14.

In the present example the mixing element 38 is a so-called helical mixing element, but can also be formed by one of a Quadro mixing element, a T-mixing element or the like.

The mixing element 38 is received in the housing 28 of the static mixer 12 between a rear end 21 having the distributor 34 arranged thereat and a front end 19 at which the IOR 20 is arranged.

At the front end 19 the housing 28 comprises a connection region 68 for connecting the IOR 20 at an outer surface 70 of the housing 28.

The connection region 68 comprises a connecting protrusion 72 that extends circumferentially about the housing 28. In the specific example shown the connecting protrusion 72 is formed as a ring-shaped structure. In this connection it should be noted that also other types of connecting protrusions 72 can be used, the proviso is that these permit a relative rotation between the IOR 20 and the housing 28.

A connecting shoulder 74 is provided spaced apart from the connecting protrusion 72 along the longitudinal axis A and more remote from the front end 19 than the connecting protrusion 72.

The connecting shoulder 74 forms part of the connection region 68 used for connecting the IOR to the outer surface of the housing 28 at the front end 19.

In this connection it should be noted that a spacing between the connecting shoulder 74 and the connecting protrusion 72 is typically selected in the range of 0.005 to 0.2 times, preferably 0.05 to 0.1 times, a length of the housing 28.

It should further be noted that the connecting protrusion 72 has a height that extends beyond the housing 28 in a plane perpendicular to the longitudinal axis A by 20 to 150 %, preferably by 30 to 100 % of a wall thickness of the housing 28, between the connecting protrusion 72 and the connecting shoulder 74.

The IOR 20 has a complementary shaped receiving section 76 having a receiving groove 78 and a receiving abutment 80.

The receiving groove 78 is configured to receive the connecting protrusion 72. To this end it should be noted that the receiving groove 78 has a shape that is complementary to the shape of the connecting protrusion 72 and a depth that is complementary to the height of the connecting protrusion in a plane perpendicular to the longitudinal axis A.

The receiving abutment 80 is configured to mate with the connecting shoulder 74 and for this purpose is shaped complementary to the connecting shoulder 74.

The connecting region 68 and the receiving section 76 are formed such that the IOR 20 is captively held at the static mixer 12 and cannot move axially relative to the static mixer 12 along the longitudinal axis, but a relative rotational movement about the longitudinal axis A is permitted.

In this way a medical or dental professional or the like can rotate the IOR 20 relative to the static mixer 12 for positioned the IOR 20 at an intended point of dispensing in an as simple as possible manner.

The IOR 20 comprises a cannula 82 for dispensing the mixed materials M, M' at the intended point of dispensing, i.e. within a cavity of a tooth or the like.

The cannula 82 is arranged to extend at an angle selected in the range of 0 to 90° with respect to the longitudinal axis A, especially in the range of 15 to 75° with respect to the longitudinal axis A. In the present example the angle amounts to 30° relative to the longitudinal axis A.

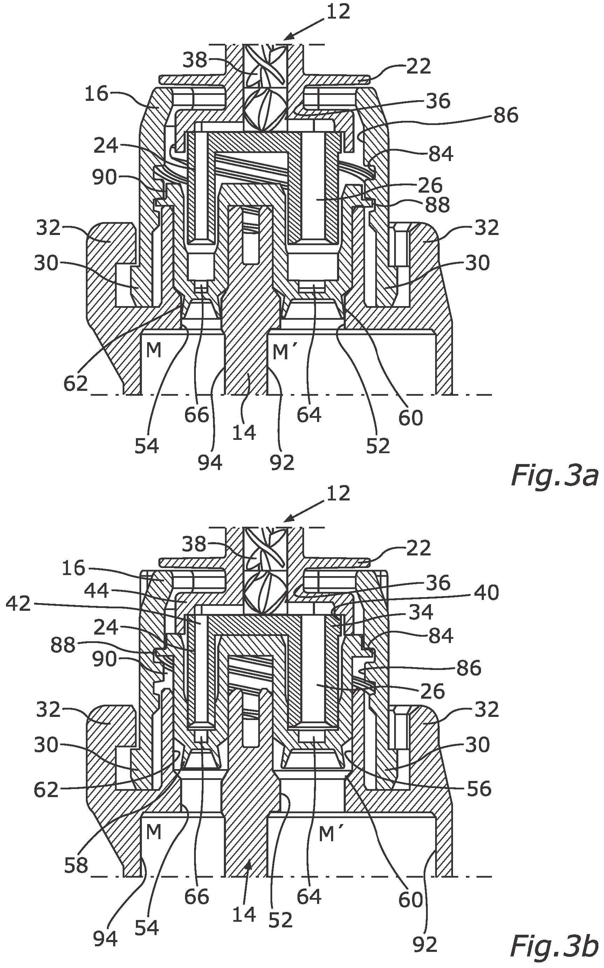

Fig. 3a &b show sectional views of the dispensing system 10 of Figs. 1b and 1c in the position of connection and in the position of use of the dispensing system 10.

The plug 50 can be seen as engaging an inner thread 84 on an inner surface 86 of the connector 16. The inner thread 84 is used to entrain the plug 50 in the axial direction along the longitudinal axis A.

In the example shown, a rotation of the connector 16 brings about a lifting of the plug 50 along the longitudinal axis A away from the cartridge 14 into the position of use shown in Fig. 3b such that the windows 64, 66 align with the respective inlet 24, 26.

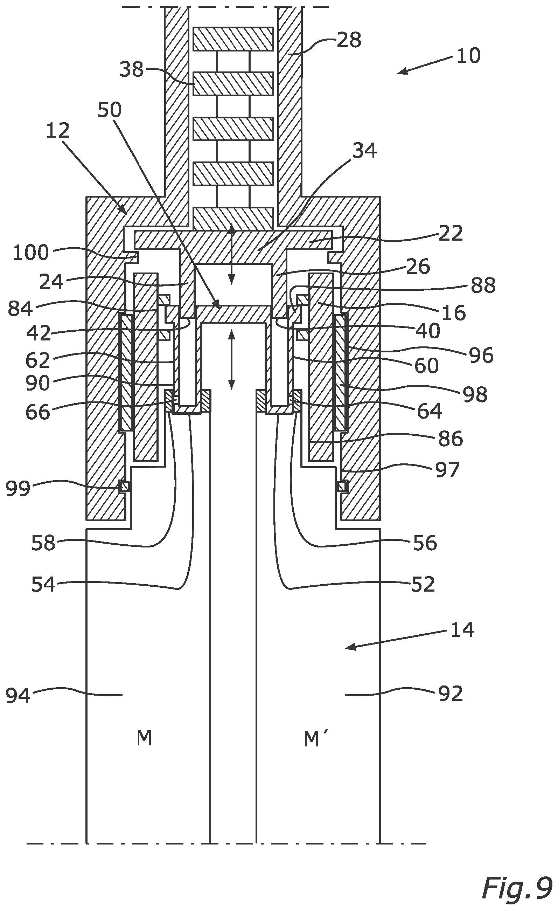

It should be noted that if a different direction of the inner thread 84 is used that the plug 50 could also be pushed axially towards the cartridge 14 along the longitudinal axis A. Such a configuration is shown in Fig. 9, which is referred to further below.

If this arrangement is selected then the windows 64, 66 would arrive within a respective cartridge chamber 92, 94 of the cartridge 14.

The seals 56, 58 respectively seal each of the outlet passages 52, 54 and thereby avoid a fluid communicating connection from arising between the material M, M' stored in the respective cartridge chamber 92, 94 and the respective window 64, 66 when the cartridge is not in the position of use.

A piston (not shown) arranged in a respective cartridge chamber 92, 94 can be used to dispense the material M, M' in a manner known per se via the outlet passages 52, 54 and subsequently the static mixer 12 in the position of use. Such a piston can be acted on by a plunger rod of a dispenser in a manner known per se.

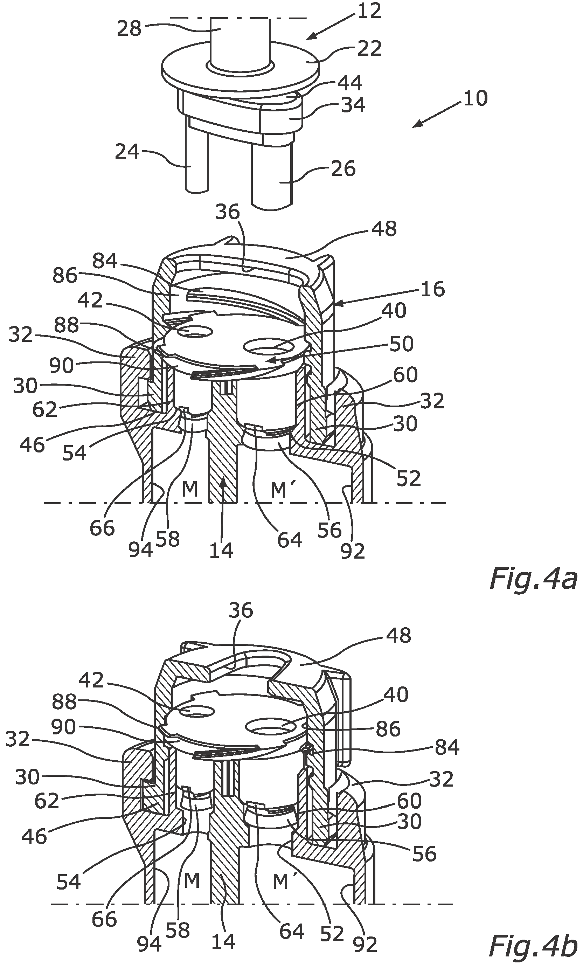

Fig. 4a &b show part sectional views of components of the dispensing system 10 prior to connection, i.e. as is shown in Fig. 1a and in the position of use, i.e. in a situation similar to Fig. 1c with the static mixer 12 not installed at the cartridge 14, but with the connector 16 having been rotated relative to the cartridge.

It should be noted that the static mixer 12 is component that is separate from the connector 16 and that is not only locked on a rotation of the connector 16 relative to the static mixer 12, but also placed into fluid communication with the outlet passages 52, 54 in the same movement.

As indicated in the position shown in Fig. 4b, the fluid communication between the cartridge chambers 92, 94 is made possible as the plug 50 is moved from a sealed position in a position of non-use into a non-sealed position in the position of use by lifting the plug 50 along the longitudinal axis A and thereby disengaging the respective seals 56, 58 from contact with the outlet passages 52, 54 and permitting the material M, M' to flow into the respective chamber 60, 62.

From the respective chamber 60, 62 the material M, M' can flow into the plug 50 via the respective window 64, 66 and into the inlets 24, 26 of the static mixer 12, where the material M, M' is subsequently mixed by the mixing element 38 and then output via the cannula 82 of the IOR 20.

A rotation of the connector 16 locks the connector to the static mixer 12 and to the cartridge 14, in the non-locked state and when no static mixer 12 is present, the connector 16 can be removed from the cartridge 14 and this can be used with conventional static mixers (not shown) obtainable from the present applicant. If such conventional static mixers are used these typically comprise an integrally formed closure of the bayonet type closure being arranged non-removable from the static mixer and on discarding the static mixer contributing to the waste that needs to be disposed. Thus, forming the closure 18 at the cartridge 14 means that less plastic waste is brought about than if the closure is integrally present at the static mixer.

A top plate of the plug 50 comprises two outlet openings of the two outlets 40, 42 that are connected to the two respective windows 64, 66 acting as inlets into the plug 50 from the cartridge 14. The respective seal 56, 58 is arranged downstream of the outlet openings and the windows 64, 66 along the longitudinal axis A.

In a side view the plug 50 has an essentially T-shaped shape, in a view perpendicular to this side view, the plug has a C-shaped shape.

The outlets 40, 42 of the plug 50 are formed as generally cylindrical channels with an opening being formed at one of its ends and the respective seal 56, 58 being formed at the opposite end to the respective opening along the longitudinal axis A. The end of the channel of the outlet 40, 42 having the seal 56, 58 arranged thereat is closed off, so that no direct flow of material M, M' can arrive within the cylindrical channels from the cartridge, rather, the windows 64, 66 forming the inlets into the outlets 40, 42 of the plug 50 are respectively formed such that their opening is arranged perpendicular to the opening of the cylindrically shaped outlets 40, 42.

The plug 50 is only able to be moved axially, but cannot rotate due to the fact that the respective outlets 40, 42 of the plug 50 are arranged within the outlet passages 52, 54.

The cartridge 14 shown is a so-called side by side two-component cartridge 14 for storage of two different materials M, M' in a respective one of the cartridge chambers 92, 94. The outlet passages 52, 54 that are connected to the respective cartridge chamber 92, 94 in a fluid conducting manner are arranged in parallel to one another and the longitudinal axis A.

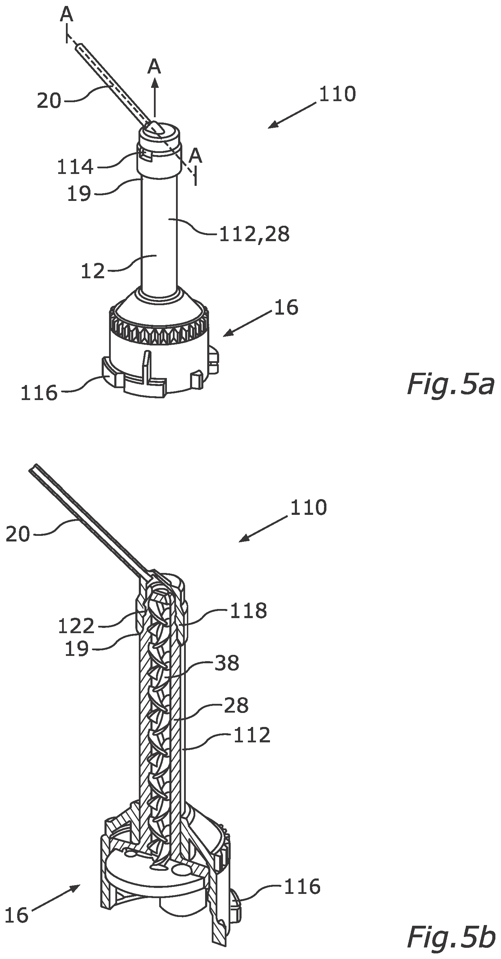

Fig. 5a &b show a further type of dispensing outlet 110. Fig. 5a shows a perspective view of the dispensing outlet 110 and Fig. 5b shows a sectional view taken along the sectional line A:A of Fig. 5a.

The dispensing outlet 110 is configured for use in the dispensing system 10 as shown in the foregoing. The dispensing outlet 110 comprises the static mixer 12 arranged in the housing 28 and the IOR 20. The dispensing outlet 110 can be attached to a cartridge (not shown) via so-called bayonet connection means 116 as are well known to the person skilled in the art.

In this connection it should be noted that also other types of connection means differing from the bayonet connection means 116 can also be employed.

The IOR 20 is attached to an outer side 112 of the housing 28 such that the IOR 20 can rotate relative to the static mixer 12 but cannot be axially moved, i.e. cannot be moved along the longitudinal axis A, but can be rotated about the longitudinal axis A.

The IOR 20 comprises an inlet 118 arranged at the end 19 of the static mixer 12. The end 19 of the static mixer 12 is inserted into the inlet 118 and snap fit into place there via two snap-fit connections 120.

The end 19 of the outer side 112 of the housing 28 comprises a circumferentially extending lip 122. In the example shown in Fig. 5b the lip extends completely around the outer side 112 of the housing 28. It should however be noted that the lip 122 may also comprises two or more part lips (not shown). The function of the lip 122 is to provide a part of the snap fit connection 120 via which the IOR 20 is attached to housing 28. The attachment is selected such that the IOR cannot be removed from the housing 28 during a normal use thereof.

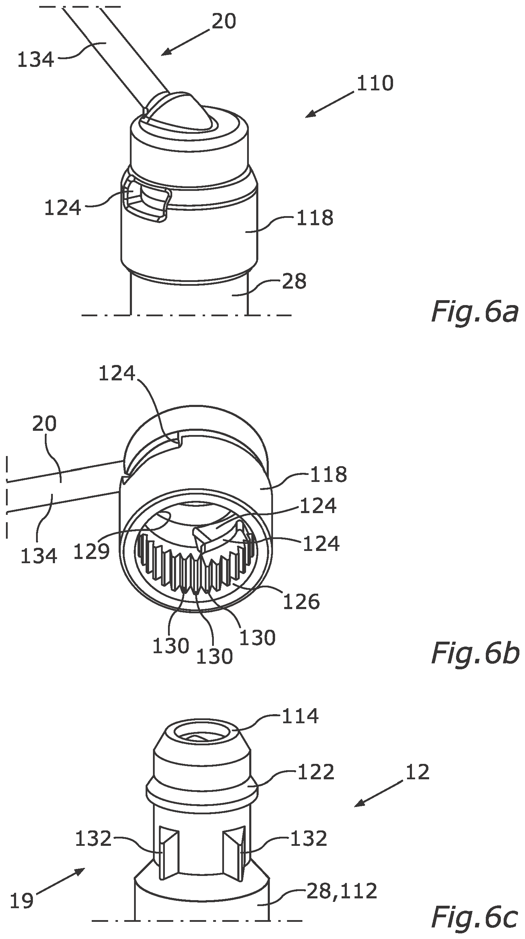

Fig. 6a to c show views of the intra oral rotational tip 20 of Fig. 5a & 5b. In Fig 6a the IOR 20 is attached to the static mixer 12. The end 19 of the outer side 112 of the housing 28 is inserted into the inlet 118.

The inlet 118 further comprises two apertures 124. These apertures 124 form part of the snap-fit connection 120. It should be noted in this connection that the snap-fit connection could also be formed without these apertures 124.

As viewed from an inlet opening 126 of the inlet 118, the inlet 118 comprises two circumferentially extending ribs 128 respectively arranged at one of the apertures 124, with the apertures 124 being arranged downstream of the respective circumferentially extending rib 128 when viewed from the inlet opening 126.

When the IOR 20 is snap-fit into place at the static mixer 12, the two ribs 128 engage behind the circumferential lip 122. The IOR 20 is thereby axially fixed to the static mixer 12.

The inlet 118 of the IOR 20 comprises an inner surface 129 having a plurality of inner surface ribs 130 arranged thereat as shown in Fig. 6b. The inner surface ribs 130 extend in parallel to one another and the longitudinal axis A.

As indicated in Fig. 6c the static mixer 12 has an outlet 114 that is aligned with a passage 134 (see Fig. 6a) of the IOR 20, with the material to be dispensed exiting the outlet 114 and subsequently from the passage 134.

As further indicated in Fig. 6c, the outer side 112 of the housing 28 comprises one or more outer side ribs 132 arranged at the outer side 112. The outer side ribs 132 extend in parallel to one another and to the longitudinal axis A.

The inner surface ribs 130 are configured to mesh with the outer side ribs 132. In this way the IOR 20 can be rotated about the longitudinal axis A and the static mixer 12. The IOR 20 can be positioned relative to the static mixer 12 in dependence on the mesh position.

In this way the IOR 20 of the dispensing outlet 110 can be positioned e.g. at a tooth of a patient to be treated, and the cartridge attached thereto can be rotated by e.g. a dental professional, in order to dispense the material at a desired angle in an expedient manner.

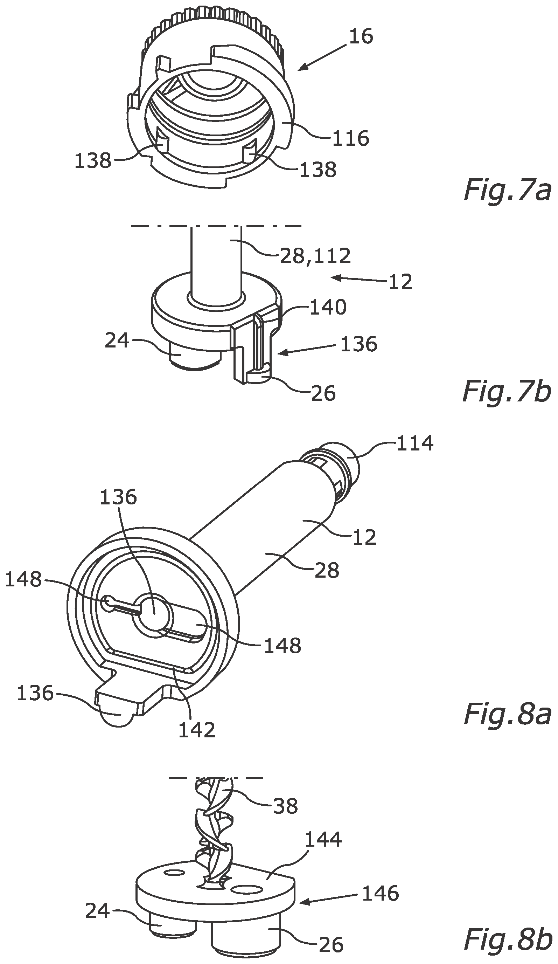

Fig. 7a &b show views of components of the dispensing outlet 110 of Figs. 5a & 5b. The static mixer 12 comprises the housing 18 in which the mixing element 38 (see e.g. Fig. 8b) is arranged and the connector 16. The connector 16 is rotatable about the static mixer 12 in order to fix the static mixer 12 to a cartridge in a manner known per se.

In order to align the static mixer 12 relative to the connector 16 and to maintain their relative positioning, the static mixer comprises a positioning grid 136 that cooperates with two or more positioning grooves 138 arranged within the connector 16.

For this purpose the positioning grid 136 comprises a positioning protrusion 140 that is configured to engage the grooves 138.

Fig. 8a &b show views of further components of the dispensing outlet 110 of Figs. 5a & 5b. The housing 28 of the static mixer 12 comprises an energy carrier 142 shaped as an elongate strip arranged adjacent the positioning grid 136 as indicated in Fig 8a.

An inlet manifold 146 of the static mixer 12 comprises the inlets 24, 26 into the static mixer 12 and is integrally formed the mixing element 38, e.g. in an injection molding or additive manufacturing process. The inlet manifold 146 is inserted into the housing 28 such that the inlets 24, 26 are aligned with channels 148 in the housing for guiding the material to be dispensed to the mixing element 38 and the energy carrier 142 is aligned with a ledge 144 of the inlet manifold 146.

Once the inlet manifold 146 is inserted into the housing 28 and the two components are bonded one to another via the energy carrier 142 and the ledge144, e.g. in an ultrasonic welding process. Thereby the housing 28 of the static mixer 12 and the inlet manifold are permanently connected to one another in an aligned manner.

The static mixers 12 described in the foregoing are used to mix multi-component material M, M' dispensed from the multi-component cartridge 14. Such mixers 12 are used in a plethora of fields of application ranging from industrial applications, such as the use of adhesives to bond structural components one to another, or as protective coatings for buildings or vehicles, to medical and dental applications, for example, to make dental molds.

The multi-component material M, M' is, for example, a two-component adhesive comprising a filler material and a hardener. In order to obtain the best possible mixing result, e.g. an adhesive having the desired bond strength, the multi-component material M, M' has to be thoroughly mixed.

The multi-component cartridge 14 can thus be filled with materials M, M' selected from the group of members consisting of topical medications, medical fluids, wound care fluids, cosmetic and/or skin care preparations, dental fluids, veterinary fluids, adhesive fluids, disinfectant fluids, protective fluids, paints and combinations of the foregoing.

Such materials M, M' and hence the dispensing system 10 can therefore be expediently used in the treatment of target areas such as the nose (e.g. anti-histaminic creams etc.), ears, teeth (e.g. molds for implants or buccal applications (e.g. aphtas, gum treatment, mouth sores etc.), eyes (e.g. the precise deposition of drugs on eyelids (e.g. chalazion, infection, anti-inflammatory, antibiotics etc.), lips (e.g. herpes), mouth, skin (e.g. anti-fungal, dark spot, acne, warts, psoriasis, skin cancer treatment, tattoo removal drugs, wound healing, scar treatment, stain removal, anti-itch applications etc.), other dermatological applications (e.g. skin nails (for example anti-fungal applications, or strengthening formulas etc.) or cytological applications.

Alternatively, the materials M, M' and hence the dispensing system 10 can also be used in an industrial sector both for the production of products as well as for the repair and maintenance of existing products, e.g. in the building industry, the automotive industry, the aerospace industry, in the energy sector, e.g. for wind-turbines, etc. The dispensing system 10 can, for example, be used for the dispensing of construction material, sealants, bonding material, adhesives, paints, coatings and/or protective coatings.

Fig. 9 shows a sectional view of an alternative embodiment of a dispensing system 10 in accordance with the present invention. In principle, the basic structural and functional configuration of this dispensing system 10 corresponds to the above described dispensing system 10. Thus, a detailed description of every single feature of this dispensing system 10 is omitted. Rather, the main differences will be addressed for the sake of brevity.

The first main difference is that in the herein showed configuration, a rotation of the connector 16 brings about a pushing and pulling of the plug 50 along the longitudinal axis A towards and away from the cartridge 14 into or from the position of use, in which the windows 64, 66 are within a respective cartridge chamber 92, 94 of the cartridge 14. Therefore, the connector 16 has locking grooves (the inner thread 84) on an inner surface 97 configured to engage with corresponding locking protrusions (the outer thread 88) of the plug 50.

The seals 56, 58 respectively seal each of the outlet passages 52, 54 and thereby avoid a fluid communicating connection from arising between the material M, M' stored in the respective cartridge chamber 92, 94 and the respective window 64, 66 when the cartridge is not in the position of use.

The second main difference is that in the shown alternative embodiment the static mixer 12 comprises a housing 28 enclosing the mixing element 38 and the inlets 24, 26. Thus, the housing 28 serves as protective cap for the mixing element 38 and the inlets 24, 26 preventing anti contamination thereof. The housing 28 comprises multiple axially extending locking grooves 96 on an inner surface 97 thereof in the region of the connector 16. The connector 16 comprises the same number of axially extending locking protrusions 98, each configured to engage with one of the locking grooves 96 of the housing 28 to rotationally fix the housing 28 to the connector 16. Thus, the rotation of the connector 16 into the position of use can be caused by a rotation of the housing 28.

This means that for this embodiment it is preferred that the connector 16 has locking grooves 84 on an inner surface 97 thereof configured to engage with corresponding locking protrusions 88 of the plug 50. Furthermore, the connector 16 has axially extending locking protrusions 98 on an outer surface thereof, each configured to engage with one of the locking grooves 96 of the housing (protective cap) 28 to rotationally fix the housing 28 to the connector 16. In order to minimize the risk of contamination, the overall configuration should be seamless and smooth, while the housing 28 is connected to the other components 14 and 16 purely with inner components without any outer component.

Thus, an overall design with a smooth seamless or merely slightly overhanging transition from the cartridge 14 to the mixer 12 is possible. Such a configuration is in particular preferred for dental and medical application in order to reduce the risk of injuries and contamination.

The housing 28 serving as protective cap can have a round (with vertical grooves), oval, rounded triangular or rounded polygonal cross-sectional shape.

To be able to decouple the rotation of the connector 16 from the inlets 24, 26 of the static mixer 12, the internal components of the static mixer 12, in particular including the protective disc 22, the inlets 24, 26 and the mixing element 38, are coupled in an axially fixed but rotationally movable manner to the housing 28. In the shown embodiment, this coupling is achieved via at least one connection protrusion 100 holding the protective disc 22.

Finally, the housing 28 of the embodiment of Fig. 9 is configured to be fixed to the cartridge 14 via a further fixing configuration 99, in particular in the form of a snap-in configuration or a thread, to prevent an unintentional removal of the static mixer 12 from the cartridge 14.

Alternative, it is also possible that the internal parts 38, 22 etc. of the mixer 12 are rotatably fixed in the housing 28 and tightened by the contact pressure that occurs when the mixer 12 is screwed onto the cartridge 14.

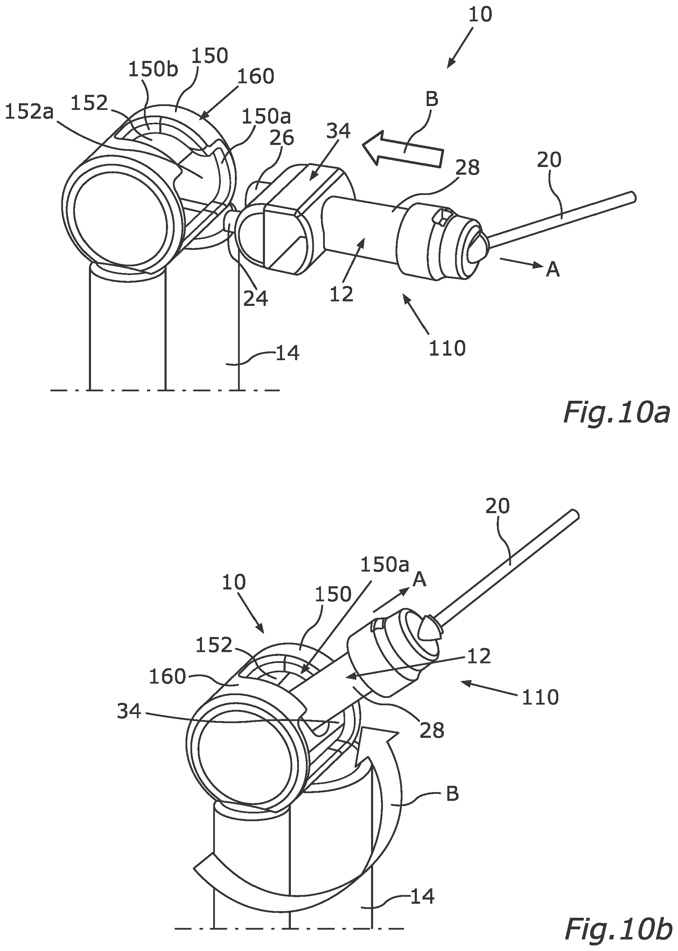

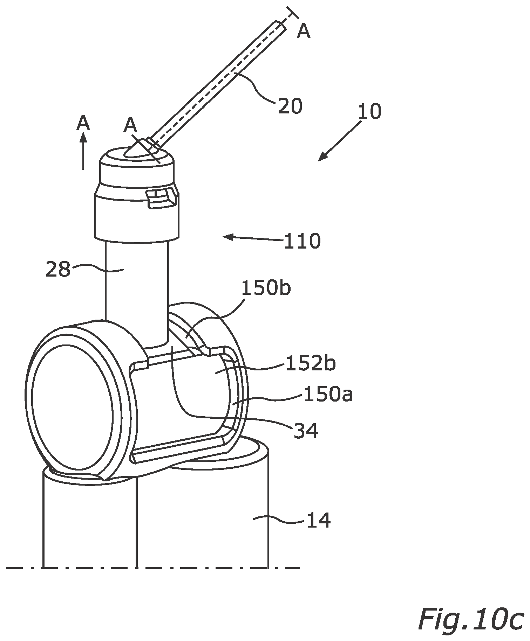

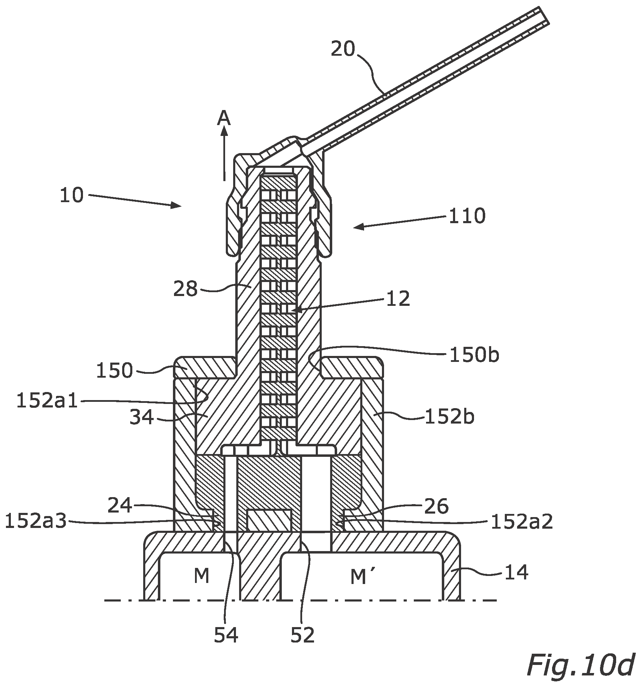

Fig. 10a to d show a further type of dispensing system 10 in different states of use. Fig. 10a shows a perspective view of the dispensing system 10 in the pre-connection position of the corresponding dispensing outlet 110. Fig. 10b shows a perspective view of the dispensing system 10 in the position of connection of the dispensing outlet 110. Fig. 10c shows a perspective view of the dispensing system 10 in the position of use of the dispensing outlet 110 and Fig. 10d shows a sectional view taken along the sectional line A:A of Fig. 10c.

The dispensing system 10 comprises a dispensing outlet 110 with a static mixer 12 arranged in a housing 28, and an IOR 20. The dispensing outlet 110 can be attached to a cartridge 14 via a rotational connection configuration 160 as will be described in the following.

Said connection configuration 160 comprises a barrel-shaped non-rotational engagement part 150 enclosing a pivotable barrel-shaped connector 152. The engagement part 150 is provided with an opening 150a for inserting a distributor 34 of the dispensing outlet 110. The connector 152 comprises a passageway 152a for receiving the distributor 34 of the dispensing outlet 110. As illustrated in Fig. 10a, the opening 150a of the engagement part 150 and an outlet opening 152a1 of the passageway 152a are aligned with each other in the pre-connection state of the dispensing system 10, such that the distributor 34 can be inserted through the opening 150a into the passageway 152a running through a massive main body 152b of the connector 152 (see the arrow B in Fig. 10a).

When the distributor 34 is inserted fully into the passageway 152a of the connector 152, the dispensing outlet 110 can be rotated together with the connector 152 about the rotational axis of the connector 152 extending perpendicular to the longitudinal axis A of the dispensing outlet 110 (see arrow B in Fig. 10b). By this rotation, the housing 28 enters a guiding slot 150b in the engagement part 150 having a smaller width than the distributor 34. Thus, the dispensing outlet 110 with the distributor 34 is fixed to the engagement part 150

After a rotation of 90° (at least in the illustrated embodiment), inlets 24 and 26 connected to the distributor 34 of the dispensing outlet 110 are aligned with and connected to corresponding outlet passages 52 and 54 of the cartridge 14, as can be seen in Fig. 10d. In the illustrated embodiment, each of said inlets 24 and 26 is provided within an own inlet opening 152a2 or 152a3 of the passageway 152a. The distributor 34 is rotated fully out of the opening 150a of the engagement part 150, such that the distributor 34 is hold by the engagement part 150 within the passageway 152a of the connector 152 (see Fig. 10c). Now, the dispensing outlet 110 is in the position of use and ready to dispense the materials M and M' from the cartridge 14.

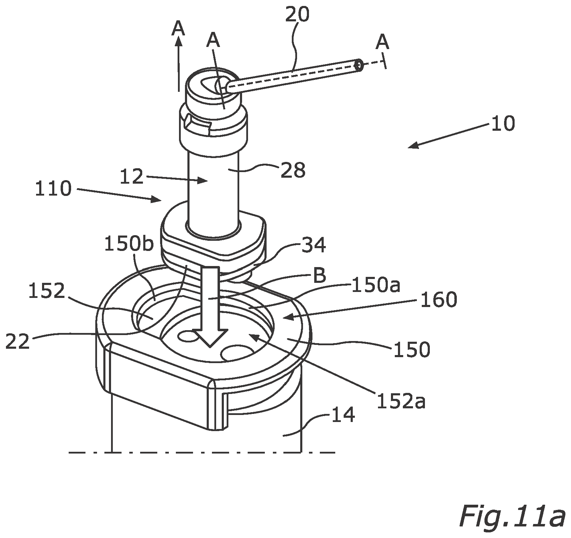

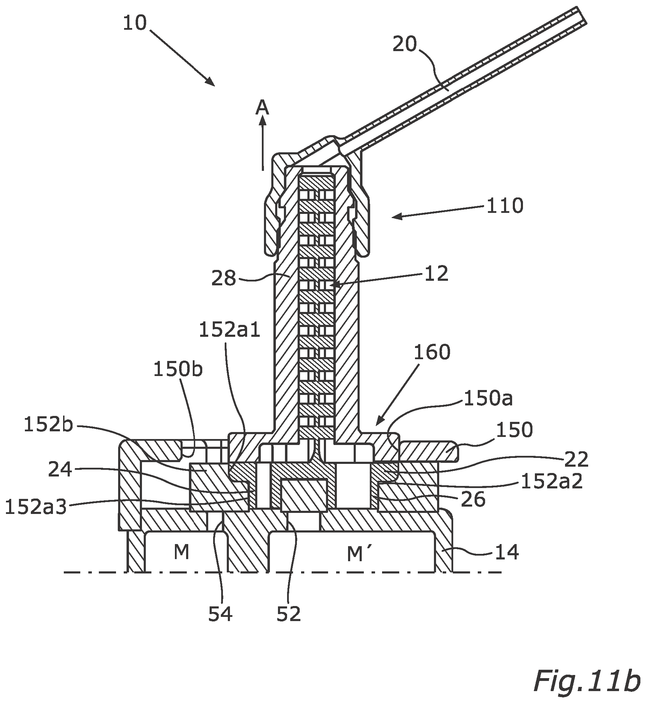

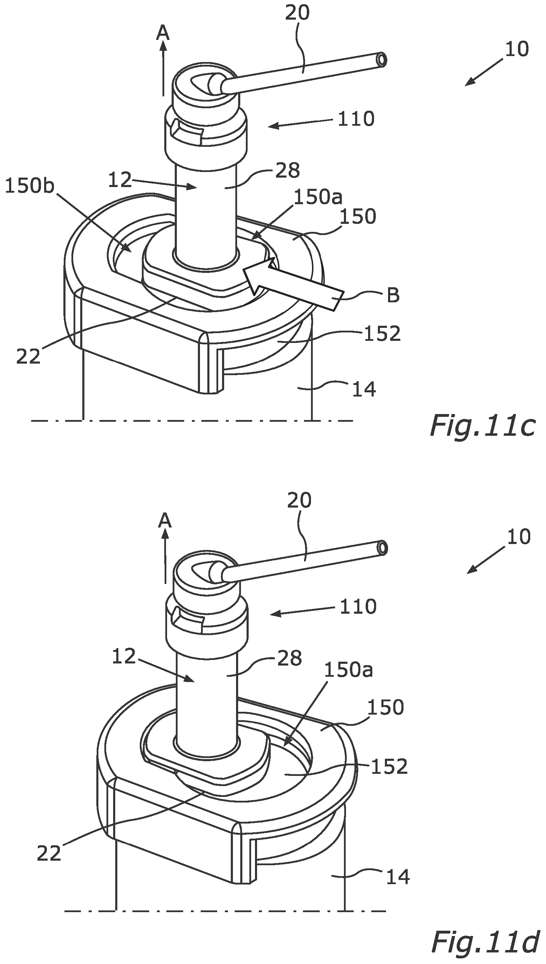

Fig. 11a to d show another further type of dispensing system 10 in different states of use. Fig. 11a shows a perspective view of the dispensing system 10 in the pre-connection position of the corresponding dispensing outlet 110. Fig. 11b shows a sectional view taken along the sectional line A:A of Fig. 11a in the position of connection of the dispensing outlet 110. Fig. 11c shows a perspective view of the dispensing system 10 in the position of connection of the dispensing outlet 110. Fig. 11d shows a perspective view of the dispensing system 10 in the position of use of the dispensing outlet 110.

The dispensing system 10 comprises a dispensing outlet 110 with a static mixer 12 arranged in a housing 28, and an IOR 20. The dispensing outlet 110 can be attached to a cartridge 14 via a sliding connection configuration 160 as will be described in the following.

Said connection configuration 160 comprises a flat non-movable engagement part 150 enclosing a slidable connector 152. The engagement part 150 is provided with an opening 150a for inserting a protective disc 22 of the dispensing outlet 110. The connector 152 comprises a passageway 152a for receiving the protective disc 22 of the dispensing outlet 110. As illustrated in Fig. 11a, the opening 150a of the engagement part 150 and an outlet opening 152a1 of the passageway 152a are aligned with each other in the pre-connection state of the dispensing system 10, such that the protective disc 22 can be inserted through the opening 150a into the passageway 152a running through a massive main body 152b of the connector 152 (see the arrow B in Fig. 11a). At this state, inlets 24 and 26 of the dispensing outlet 110 are misaligned with corresponding outlet passages 52 and 54 of the cartridge 14 as it is illustrated in Fig. 11b. In the illustrated embodiment, each of said inlets 24 and 26 is provided within an own inlet opening 152a2 or 152a3 of the passageway 152a.

When the protective disc 22 is inserted fully into the passageway 152a of the connector 152, the dispensing outlet 110 can be slit together with the connector 152 perpendicular to the longitudinal axis A of the dispensing outlet 110 with respect to the engagement part 150 (see the arrow B in Fig. 11c). By this sliding, the housing 28 enters a guiding slot 150b in the engagement part 150 having a smaller width than the protective disc 22. Thus, the dispensing outlet 110 with the protective disc 22 is fixed to the engagement part 150

After a sliding movement of a predetermined amount, inlets 24 and 26 connected to the protective disc 22 of the dispensing outlet 110 are aligned with and connected to the corresponding outlet passages 52 and 54 of the cartridge 14. Furthermore, the protective disc 22 is slit into engagement with the engagement part 150 around the guiding slot 150b. Thus, the protective disc 22 is hold by the engagement part 150 within the passageway 152a of the connector 152 (see Fig. 11d). Now, the dispensing outlet 110 is in the position of use and ready to dispense the materials M and M' from the cartridge 14.

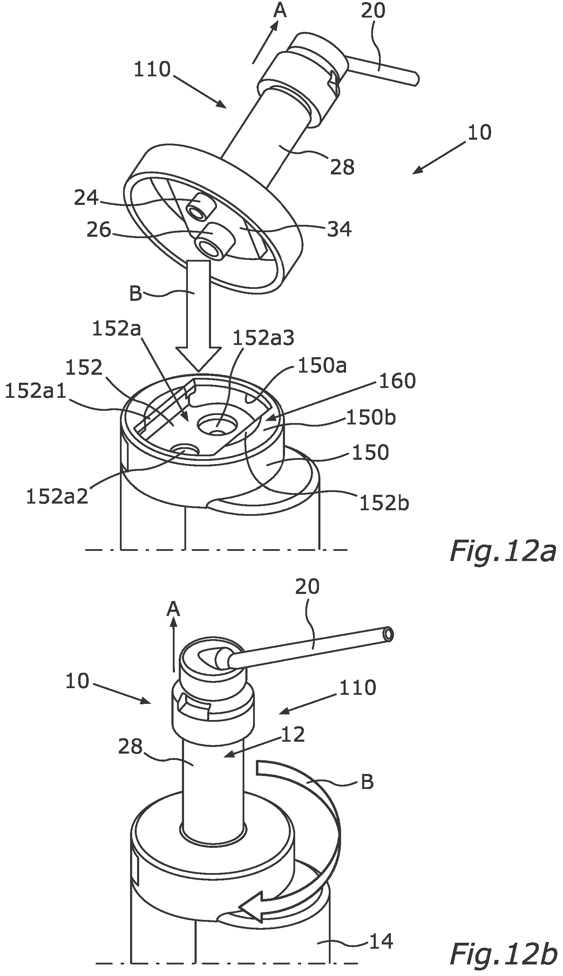

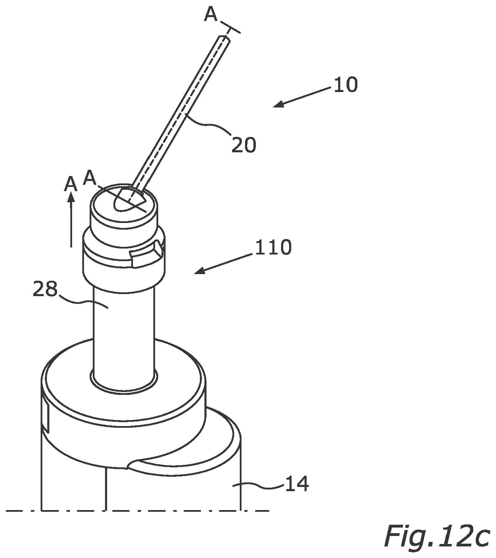

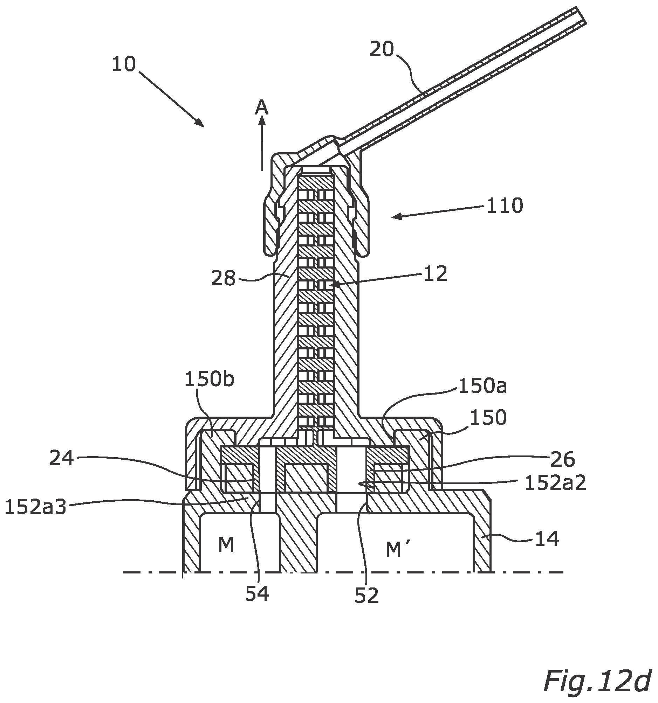

Fig. 12a to d show a last further type of dispensing system 10 in different states of use. Fig. 12a shows a perspective view of the dispensing system 10 in the pre-connection position of the corresponding dispensing outlet 110. Fig. 12b shows a perspective view of the dispensing system 10 in the position of connection of the dispensing outlet 110. Fig. 12c shows a perspective view of the dispensing system 10 in the position of use of the dispensing outlet 110 and Fig. 12d shows a sectional view taken along the sectional line A:A of Fig. 12c.

The dispensing system 10 comprises a dispensing outlet 110 with a static mixer 12 arranged in a housing 28, and an IOR 20. The dispensing outlet 110 can be attached to a cartridge 14 via an alternative rotational connection configuration 160 as will be described in the following.

Said connection configuration 160 comprises a non-rotational engagement part 150 enclosing a rotatable connector 152. The engagement part 150 is provided with an opening 150a for inserting a distributor 34 of the dispensing outlet 110. The connector 152 comprises a passageway 152a for receiving the protective disc 22 connected to the distributor 34 of the dispensing outlet 110. As illustrated in Fig. 12a, the opening 150a of the engagement part 150 and an outlet opening 152a1 of the passageway 152a are aligned with each other in the pre-connection state of the dispensing system, such that the protective disc 22 can be inserted through the opening 150a into the passageway 152a running through a massive main body 152b of the connector 152 (see the arrow B in Fig. 12a).

When the protective disc 22 is inserted fully into the passageway 152a of the connector 152, the dispensing outlet 110 can be rotated together with the connector 152 about the rotational axis of the connector 152 corresponding to the longitudinal axis A of the dispensing outlet 110 (see arrow B in Fig. 12b). By this rotation, the protective disc 22 is at least partly rotated under an engagement section 150b of the engagement part 150 having a smaller width than the protective disc 22. Thus, the dispensing outlet 110 with the protective disc 22 is fixed to the engagement part 150

After a rotation of 90° (at least in the illustrated embodiment), inlets 24 and 26 connected to the protective disc 22 of the dispensing outlet 110 are aligned with and connected to corresponding outlet passages 52 and 54 of the cartridge 14, as can be seen in Fig. 12d. In the illustrated embodiment, each of said inlets 24 and 26 is provided within an own inlet opening 152a2 or 152a3 of the passageway 152a. Now, the dispensing outlet 110 is in the position of use and ready to dispense the materials M and M' from the cartridge 14.

The IOR 20 comprises an outlet 164 via which the material is dispensed, with the outlet 164 being at a first end 168 of a cannula 166 of the intra oral rotational tip (IOR) 20. The first end 168 being disposed opposite to a second end 170 of the cannula 166, with the cannula 166 being connected to an inlet receptacle 158 of the IOR 20 at the second end 170.

The cannula 166 comprises a passage 174 for conducting material dispensed from the cartridge 14 via the static mixer 12 into the IOR 20 via the outlet 164 of the IOR 20.

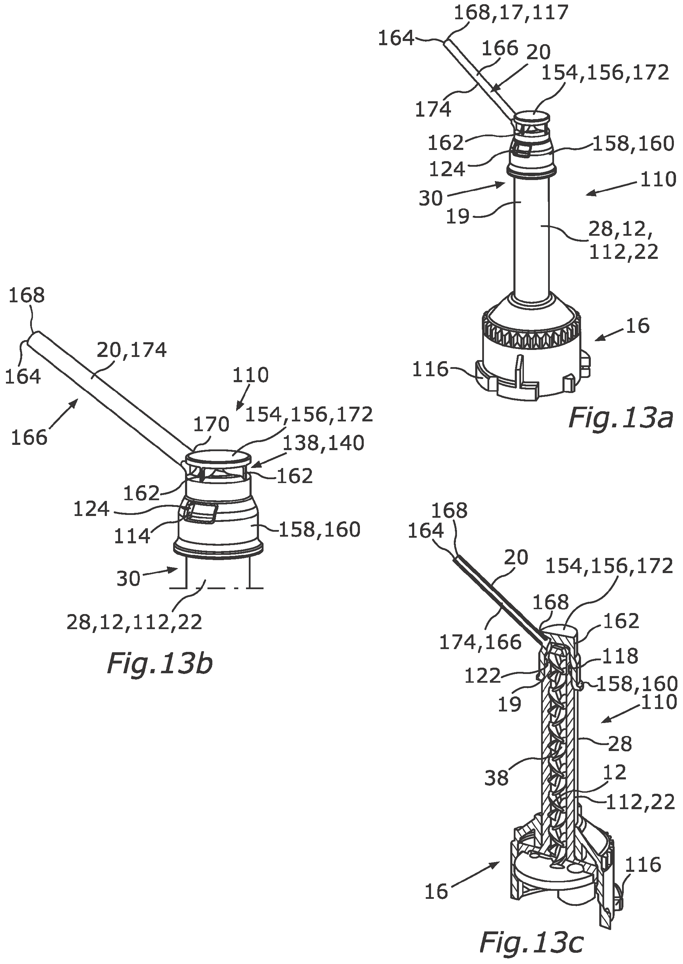

Fig. 13a to c show further views of a further kind of intra oral rotational tip 20. In Fig. 13a the IOR 20 is attached to the static mixer 12. The IOR 20 comprises the inlet receptacle 138 for attachment of the cannula 166 to the dispensing outlet 12 respectively the static mixer 12.

The end 19 of the outer side 112 of the housing 22 is inserted into the inlet 118.

The inlet 118 further comprises two apertures 124. These apertures 124 form part of the snap-fit connection 30. It should be noted in this connection that the snap-fit connection could also be formed without these apertures 124.

As viewed from an inlet opening 126 of the inlet 118, the inlet 118 comprises two circumferentially extending ribs 128 respectively arranged at one of the apertures 124, with the apertures 124 being arranged downstream of the respective circumferentially extending rib 128 when viewed from the inlet opening 126.

When the IOR 20 is snap-fit into place at the dispensing outlet 12 via an inlet receptacle 158, the two ribs 128 engage behind the circumferential lip 122. The IOR 20 is thereby axially fixed to the dispensing outlet 12.

The inlet 118 of the IOR 20 comprises an inner surface 129 having a plurality of inner surface ribs 130 arranged thereat as shown in Fig. 6b. The inner surface ribs 130 extend in parallel to one another and the longitudinal axis A.

As indicated in Fig. 13c the dispensing outlet 12 has the outlet 28 that is aligned with a passage 174 (see Fig. 13a) of the IOR 20, with the material to be dispensed exiting the outlet 114 and subsequently from the passage 174 via the cannula outlet 164.

As further indicated in Fig. 13c, the outer side 112 of the housing 22 comprises one or more outer side ribs 132 arranged at the outer side 112. The outer side ribs 132 extend in parallel to one another and to the longitudinal axis A.

The inner surface ribs 130 are configured to mesh with the outer side ribs 132. In this way the IOR 20 can be rotated about the longitudinal axis A and the dispensing outlet 12. The IOR 20 can be positioned relative to the dispensing outlet12 in dependence on the mesh position.

In this way the IOR 20 of the dispensing outlet 12 can be positioned e.g. at a tooth of a patient to be treated, and the cartridge attached thereto can be rotated by e.g. a dental professional, in order to dispense the material at a desired angle in an expedient manner.

A plate 156 is connected to a body 160 of the inlet receptacle 158 via webs 162 at that part of the inlet receptacle 158 where the cannula 166 is attached to the body 160.

The plate 156 has a flat outer surface 172 that acts as a finger positioning aid during a dispensing process such that a user can safely hold the IOR 20 during dispensing at e.g. a patient's tooth.

The plate 156 is connected to the body by one or more webs 162 of material, with the present example having three such webs 162. In this connection it should be noted that between two and six webs 162 can be provided.

Finally, it is pointed to the fact that the above configurations can be modified and/or combined with each other without leaving the scope of protection defined by the appending claims.

### NUMBERED EMBODIMENTS:

1. A dispensing outlet (110), preferably for use in a dispensing system (10), the dispensing outlet comprising at least one of a static mixer (12) and an IOR (20), with the IOR (20) being attachable at an outer side of a housing (28) of the static mixer (12) such that the IOR (20) can rotate relative to the static mixer (12) but cannot be axially moved.
2. A dispensing outlet (110) according to embodiment 1, wherein the IOR (20) comprises an inner surface (129) having one or more inner surface ribs (130) arranged thereat and the outer housing comprising one or more outer side ribs (132) arranged at the outer side (112).
3. A dispensing outlet (110) according to embodiment 2, wherein the one or more inner surface ribs (130) and the one or more outer side ribs (132) extend in parallel to one another.
4. A dispensing outlet (110) according to embodiment 2 or embodiment 3, wherein the one or more inner surface ribs (130) are configured to mesh with said one or more outer side ribs (132).
5. A dispensing outlet (110) according to one of embodiments 2 to 4, wherein the one or more inner surface ribs (130) and said one or more outer side ribs (132) extend in parallel to the longitudinal axis (A).
6. A dispensing outlet (110) according to one of embodiments 2 to 5, wherein the IOR (20) comprises an inlet (118).
7. A dispensing outlet (110) according to embodiment 6, wherein the inlet (118) comprises one or more circumferentially extending ribs (128), preferably two circumferentially extending ribs.
8. A dispensing outlet (110) according to embodiment 6 or embodiment 7, wherein the inlet (118) comprises one or more apertures (124), preferably two apertures.
9. A dispensing outlet (110) according to embodiment 7 and embodiment 8, wherein a respective one of the one or more circumferentially extending ribs (128) is are arranged at a respective one of the one or more apertures (124).
10. A dispensing outlet (110) according to embodiment 9, wherein the respective ones of the one or more apertures (124) are arranged downstream of the one or more one or more circumferentially extending ribs (128) when viewed from an inlet opening (126) of the inlet (118) of the IOR (20).
11. A dispensing outlet (110) according to one of embodiments 6 to 10, and one of claims 17 to 20, wherein the inner surface having the one or more inner surface ribs (130) is arranged at the inlet (118).
12. A dispensing outlet (110) according to one of embodiments 1 to 11, wherein the IOR (20) is non-removably attached to the outer housing (28).
13. A dispensing outlet (110) according to one of embodiments 1 to 12, wherein the IOR (20) is non-removably attached to the outer housing (28) via one or more snap fit connections (120), preferably via two snap-fit connections.
14. A dispensing outlet (110) according to one of embodiments 1 to 13, wherein the outer housing (112) comprises a circumferentially extending lip (122).
15. A dispensing outlet (110) according to one of embodiments 1 to 14, wherein the static mixer (12) comprises a positioning grid (136) that cooperates with two or more positioning grooves (138) arranged within a connector (16) of the static mixer (12).
16. A dispensing outlet (110) according to one of embodiments 1 to 14, preferably in accordance with claim 7, wherein the housing (28) of the static mixer (12) comprises an energy carrier (142), preferably arranged adjacent the positioning grid (136).
17. A dispensing outlet (110) according to one of embodiments 1 to 16, wherein an inlet manifold (146) of the static mixer (12) comprises a ledge (144).
18. A dispensing outlet (110) according to embodiment 16 and embodiment 17, wherein the inlet manifold (146) is permanently attached to the housing (28).
19. A dispensing outlet (110) according to embodiment 18, wherein the inlet manifold (146) is permanently attached to the housing (28) via the energy carrier (142) and the ledge (144).
20. A dispensing outlet (110) according to one of embodiments 1 to 19, wherein the IOR (64) comprises an inlet receptacle (138) having a body (140) to which a cannula (65) is attached.
21. A dispensing outlet (110) according to embodiment 20, further comprising a plate (156) that is connected to the body (140) of the inlet receptacle (138).
22. A dispensing outlet (110) according to embodiment 21, wherein the plate (156) is connected to the body (140) by one or more webs (144) of material.
23. A dispensing outlet (110) according to embodiment 21 or 22, further comprising a plate (156) that is connected to the body (140) of the inlet receptacle (138) via one or more webs (144) at that part of the inlet receptacle (138) where the cannula (65) is attached to the body (140).
24. A dispensing outlet (110) according to one of embodiments 21 to 23, wherein the plate (156) has a flat outer surface (172).
25. A dispensing system (10) comprising a dispensing outlet (110), a cartridge (14) and a connector (152), wherein the connector (16) is coupled to the cartridge (14), wherein the dispensing outlet (110) is separate from the connector (152) and from the cartridge (14), wherein the dispensing unit (110) can be engaged with and locked to the connector (152) as well as brought into a position of use by a translational movement followed by a rotational or translational movement of the dispensing outlet (110) relative to the cartridge (14).
26. The dispensing system (10) according to embodiment 25, wherein the connector (152) is provided within an engagement part (150) coupled non-movably to the cartridge (14) or forming a part of the cartridge (14).
27. The dispensing system (10) according to embodiment 25 or 26, wherein the connector (152) comprises a passageway (152a) for receiving a section, in particular a distributor (34) or protective disc (22), of the dispensing outlet (110) to connect the dispensing outlet (110) to the connector (152).
28. The dispensing system (10) according to one of embodiments 25 to 27, wherein the connector (152) is rotatable about an axis perpendicular to the longitudinal axis (A) of the dispensing outlet (110) relative to the cartridge (14) for locking the dispensing outlet (110) to the cartridge (14).
29. The dispensing system (10) according to one of embodiments 25 to 27, wherein the connector (152) is slidable perpendicular with respect to the longitudinal axis (A) of the dispensing outlet (110) relative to the cartridge (14) for locking the dispensing outlet (110) to the cartridge (14).
30. The dispensing system (10) according to one of embodiments 25 to 27, wherein the connector (152) is rotatable about the longitudinal axis (A) of the dispensing outlet (110) relative to the cartridge (14) for locking the dispensing outlet (110) to the cartridge (14).

### List of reference numerals:

- 10: dispensing system
- 12: static mixer
- 14: cartridge
- 16: connector
- 18: closure
- 19: end
- 20: intra oral rotational tip (IOR)
- 21: end
- 22: protective disc
- 24: inlet
- 26: inlet
- 28: housing
- 30: shoulder portion
- 32: closure mount
- 34: distributor
- 36: opening
- 38: mixing element
- 40: outlet
- 42: outlet
- 44: top side
- 46: bottom end
- 48: top end
- 50: plug element
- 52: outlet passage
- 54: outlet passage
- 56: seal
- 58: seal
- 60: chamber
- 62: chamber
- 64: window
- 66: window
- 68: connection region
- 70: outer surface of 12
- 72: connecting protrusion
- 74: connecting shoulder
- 76: receiving section
- 78: receiving groove
- 80: receiving abutment
- 82: cannula
- 84: inner thread
- 86: inner surface of connector 16
- 88: outer thread
- 90: outer surface of 50
- 92: cartridge chamber
- 94: cartridge chamber
- 96: locking groove
- 97: inner surface of housing 28
- 98: locking protrusion
- 99: fixing configuration
- 100: connection protrusion
- 110: dispensing outlet
- 112: outer side
- 114: outlet of 12
- 116: bayonet connector
- 118: inlet
- 120: snap-fit connection
- 122: lip
- 124: aperture
- 126: inlet opening
- 128: circumferential rib
- 129: inner surface
- 130: inner surface rib
- 132: outer side rib
- 134: passage
- 136: positioning grid
- 138: groove
- 140: protrusion
- 142: energy carrier
- 144: ledge
- 146: inlet manifold
- 148: channel
- 150: engagement part
- 150a: opening
- 150b: guiding slot/ engagement section
- 152: connector
- 152a: passageway 152a1 outlet opening
- 152a2: inlet opening
- 152a3: inlet opening
- 152b: body
- 154: end of IOR
- 156: plate
- 158: inlet receptacle
- 160: body of 158
- 162: webs connecting 156 to 160
- 164: outlet
- 166: cannula
- 168: first end of 166
- 170: second end of 166
- 172: flat surface
- 174: passage
- A: longitudinal axis
- B: arrow
- M, M': material, material

## Claims

1. A dispensing outlet (110), preferably for use in a dispensing system (10), the dispensing outlet comprising a static mixer (12) comprising a housing (28), wherein the housing (28) of the static mixer (12) comprises an energy carrier (142), wherein the static mixer (12) comprises an inlet manifold (146) and the inlet manifold (146) comprises a ledge (144), wherein the inlet manifold (146) is permanently attached to the housing (28) via the energy carrier (142) and the ledge (144) in an ultrasonic welding process.

2. A dispensing outlet (110) according to claim 1, wherein the static mixer (12) comprises a positioning grid (136) that cooperates with two or more positioning grooves (138) arranged within a connector (16) of the static mixer (12).

3. A dispensing outlet (110) according to claim 2, wherein the positioning grid (136) comprises a positioning protrusion (140) that is configured to engage the grooves (138).

4. A dispensing outlet (110) according to claim 2 or claim 3, wherein the energy carrier (142) is arranged adjacent the positioning grid (136).

5. A dispensing outlet (110) according to one of claims 1 to 4, wherein the energy carrier (142) is shaped as an elongate strip.

6. A dispensing outlet (110) according to one of claims 1 to 5, wherein the static mixer (12) comprises a mixing element (38) arranged in the housing (18).

7. A dispensing outlet (110) according to claim 6, wherein the inlet manifold (146) comprises two inlets (24, 26) and the inlet manifold (146) is inserted into the housing (28) such that two inlets (24, 26) are aligned with respective channels (148) in the housing (28) for guiding the material to be dispensed to the mixing element (38) and the energy carrier (142) is aligned with the ledge (144) of the inlet manifold (146).

8. A dispensing outlet (110) according to one of claims 1 to 7, wherein an outer side (112) of the housing (28) comprises a circumferentially extending lip (122).

9. A dispensing outlet (110) according to any one of the previous claims, wherein the dispensing outlet (110) comprises an IOR (20) attachable at an outer side of a housing (28) of the static mixer (12) such that the IOR (20) can rotate relative to the static mixer (12) but cannot be axially moved.

10. A dispensing system (10) comprising a dispensing outlet (110) according to any one of the claims 2 to 9 and a cartridge (14), wherein the static mixer (12) can be connected to the cartridge (14) via the connector (16).
